Europäisches Patentamt

(19) European Patent Office

Office européen des brevets

(11) **EP 1 119 477 B1**

(12) **EUROPEAN PATENT SPECIFICATION**

(45) Date of publication and mention
of the grant of the patent:
**28.08.2002 Bulletin 2002/35**

(51) Int Cl.⁷: **B60S 1/38**, B60S 1/40

(86) International application number:
**PCT/IB99/01574**

(21) Application number: **99944725.3**

(22) Date of filing: **23.09.1999**

(87) International publication number:
**WO 00/021810 (20.04.2000 Gazette 2000/16)**

(54) **A WINDSCREEN WIPER**

SCHEIBENWISCHER

ESSUIE-GLACE

(84) Designated Contracting States:
**DE ES FR GB IT**

(30) Priority: **09.10.1998 ZA 9809244**

(43) Date of publication of application:
**01.08.2001 Bulletin 2001/31**

(73) Proprietor: **Trico Products Corporation
Rochester Hills, MI 48309 (US)**

(72) Inventor: **SWANEPOEL, Adriaan, Retief
0181 Pretoria (ZA)**

(74) Representative:
**James, Michael John Gwynne et al
Wynne-Jones, Lainé & James
22, Rodney Road
Cheltenham Gloucestershire GL50 1JJ (GB)**

(56) References cited:
**EP-A- 0 594 451          EP-A- 0 816 194
GB-A- 2 308 542          US-A- 3 192 551
US-A- 3 785 002**

## Description

This invention relates to a windscreen wiper, which is also known as a windshield wiper.

The invention relates in particular to a windscreen wiper which has a curved backbone and which may have a varying width and/or thickness. It will be appreciated by those skilled in the art that the backbone may be in the form of a beam that is curved in a plane or may have compound curvature. The beam will then usually have width and thickness dimensions. The beam will also have a radius of curvature at each point along its length.

US-A-3 785 002 discloses a windscreen wiper comprising a blade body which is formed of a resiliently flexible material, the blade body having a longitudinally extending backbone connected thereto. The backbone is connected to a force-applying member at two spaced apart points by means of a pair of screws, such that transfer of forces between the force applying member and the backbone occurs exclusively through the pair of screws. The backbone has a constant thickness and a constant width along its length.

EP-A- 0 594 451 describes a windscreen wiper in which a backbone of a wiper blade has a compound curvature and varies in thickness and in width along its length.

When such a windscreen wiper is pressed onto a surface such as the windscreen (or windshield) of a vehicle, the force intensity (the force per unit length) will vary at different positions along the length of the beam. A large number of factors affect the manner in which the force intensity distribution varies, such as:

the material from which the beam is made and the Young's modulus thereof;
the length of the beam;
curvature of the beam;
curvature of the surface;
variation in any one or both of the width of the beam and the thickness of the beam;
the magnitude of the force applied to the beam; and
the position, or positions, at which the force is applied.

The applicant has found that, with shorter beams, it is adequate to apply the force at a single point. However, with longer beams, ie beams that are longer than about 400mm it is preferable to apply the force to the beam at two spaced apart points. The applicant has further found that the degree of variation of force intensity resulting from changes in curvature of the surface and the magnitude of the force applied to the beam, in use, varies significantly depending on the spacing between the points of application of the force and the ratio between the spacing distance and the total length of the beam.

The applicant has further found that if the spacing between the points exceeds a certain limit, the windscreen wiper will not operate in an efficient manner. There are two main factors which should be taken into account when determining the upper bound of the spacing between the points. Firstly, the vertical clearance between the beam and a force applying member should be taken in to account when, in use, the beam changes from straight to free form and vice versa. Secondly, longitudinal movement of the beam between the force application points should also be considered, when the beam changes from straight to free form and vice versa.

The applicant has conducted substantial analysis in this regard and believes that he has found a relationship between the spacing distance and the total length of the beam and, consequently, between the ratio of spacing distance to total length and length, which provides a windscreen wiper that operates in an improved manner.

According to a first aspect of the invention there is provided a windscreen wiper which includes

an elongate curved backbone which is of a resiliently flexible material; and
a force applying member which is connected to the backbone at two spaced apart points
with the spacing distance S (expressed in millimetres) between the points being between

$$S_1 = 0.1 * L \tag{1}$$

and

$$S_2 = 0.35 * L \tag{2}$$

where the length L is the total length of the backbone expressed in millimetres. The preferred spacing distance $S_p$ between the spaced apart points is about

$$S_p = 0.363 * L - 0.000146 * L^2 \tag{3}$$

The force applying member may be connected to the backbone in such a manner as to permit relative longitudinal displacement between the force applying member and the backbone.

The curved backbone may have a varying width and or thickness, along its length. The backbone may further have a free form curvature in a plane or may have a compound curvature (that is curved in two planes).

It will be appreciated that the force applying member normally straddles the geometric centre of the backbone. This is particularly so for a windscreen wiper that is intended for use on a driver's side. However, the force applying member may be positioned off-centre for certain cases, such as on passenger side windscreens. In that way the overall performance of the wiper may be optimised.

The invention is now described, by way of example with reference to the accompanying drawings. In the drawings,

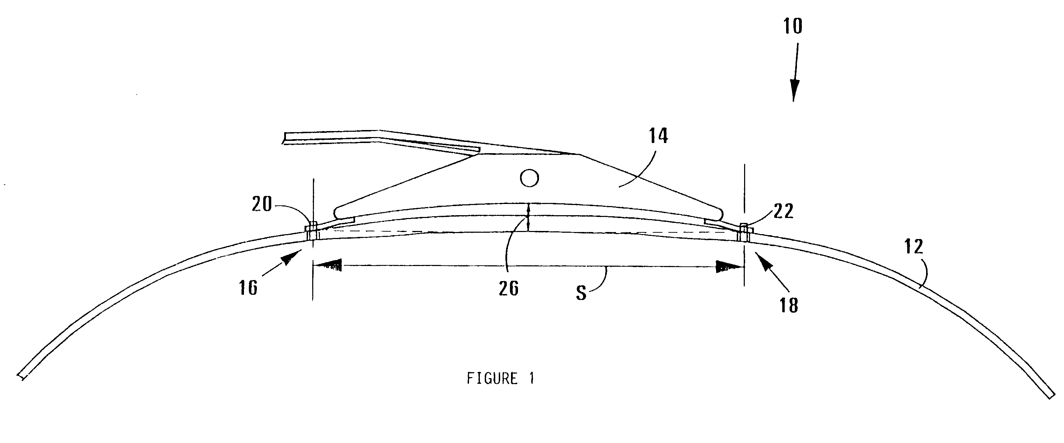

Figure 1 shows schematically a windscreen wiper in accordance with the invention;

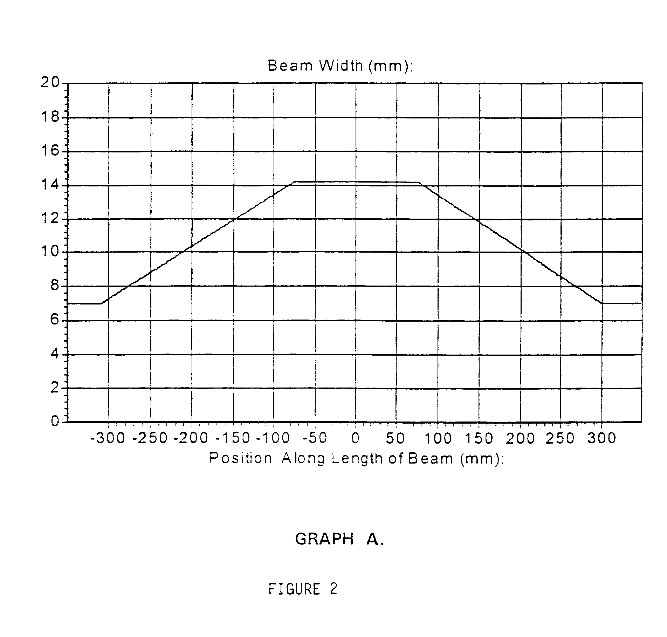

Figure 2 or Graph A illustrates the beam width at various positions along the length of the beam;

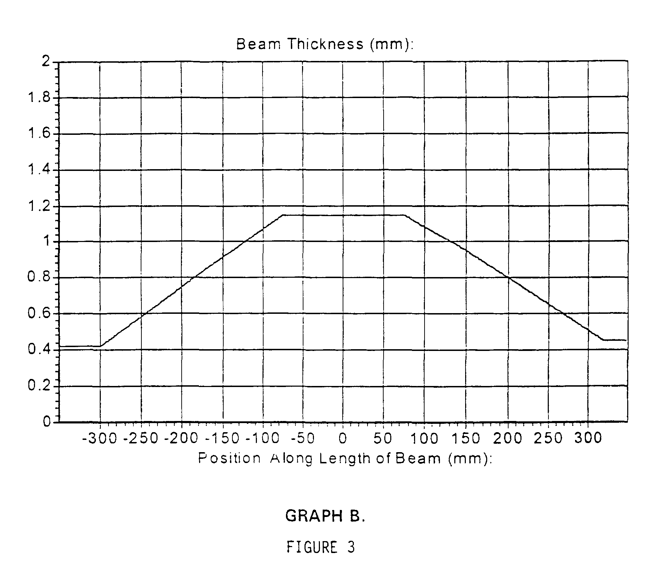

Figure 3 or Graph B illustrates the thickness of the beam at various positions along the length of the beam;

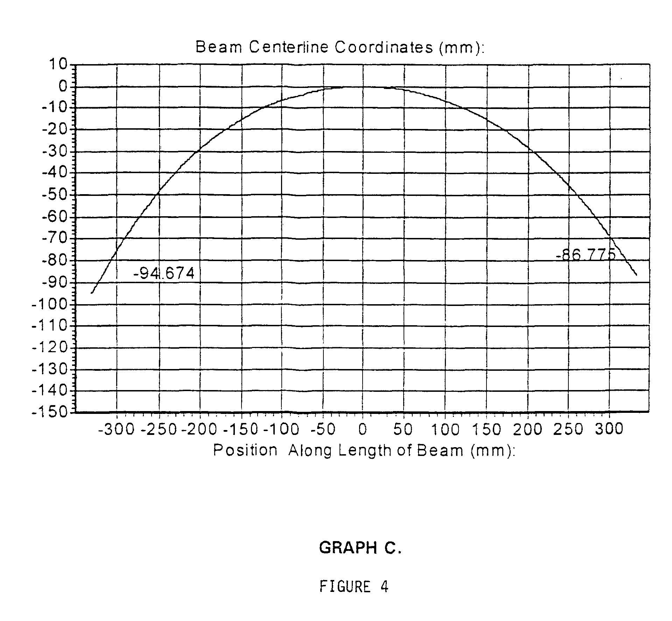

Figure 4 or Graph C shows the beam centre-line coordinate relative to the position along the length of the beam;

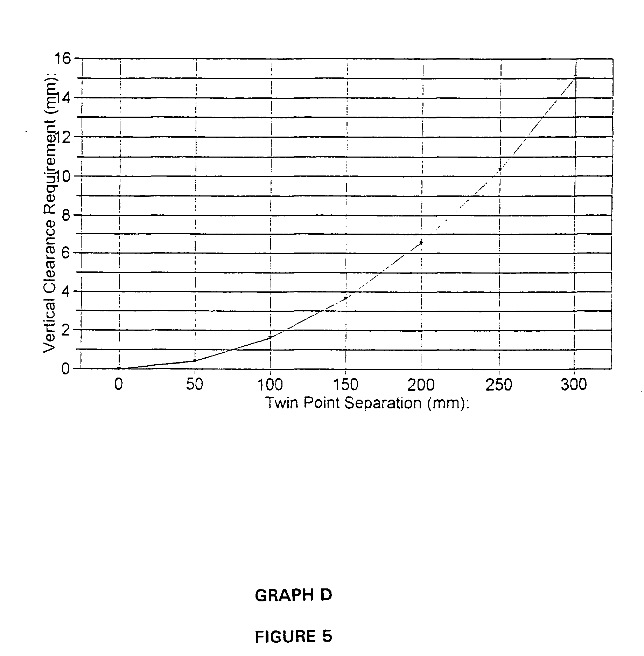

Figure 5 or Graph D illustrates the typical clearance required for the beam as a function of spacing distance S; and

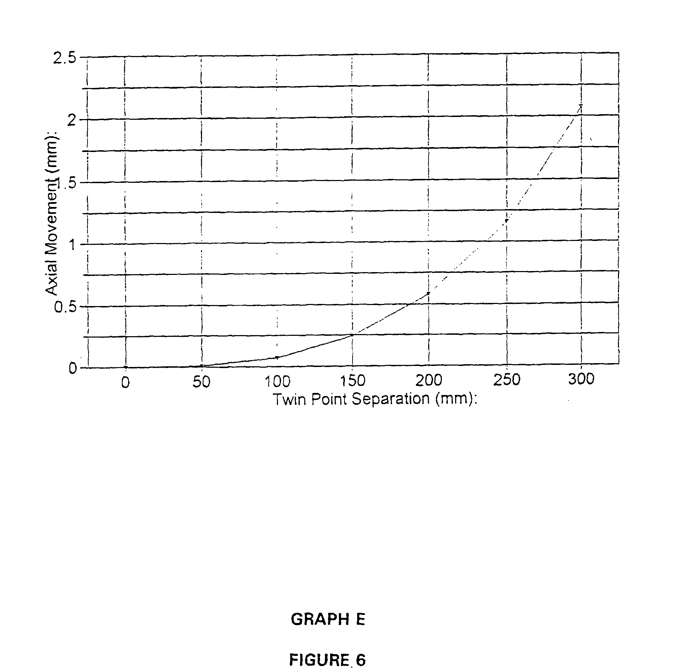

Figure 6 or Graph E illustrates the typical amount of longitudinal movement between the beam and the pin when the beam changes shape from curved to straight and vice-versa.

The windscreen wiper 10 includes a backbone 12 which is in the form of a beam. The beam is made from spring steel having a Young's modulus of 205GPa.

The length of the beam is 700mm. The beam tapers both in width and thickness from its centre toward its free ends or tips as shown in Graph A and Graph B respectively.

Graph A illustrates the beam width (in millimetres) at various positions along the length of the beam, which is also measured in millimetres. Graph B illustrates the thickness of the beam (in millimetres) at various positions along the length of the beam which is also measured in millimetres.

The beam is curved longitudinally, in a plane, with a predetermined radius of curvature at every point along its length. Graph C shows the beam centre-line coordinate relative to the position along the length of the beam (in millimetres).

A force applying member 14 is connected to the beam 12 at two spaced apart points 16 and 18, with a spacing distance S between the points. At the point 16, the force applying member 14 is connected to the beam 12 by means of a pin 20 which is pivotally located in a complementary hole in the beam 12 which does not permit relative longitudinal movement between the beam 12 and the force applying member 14. At the other point 18, the force applying member 14 is connected to the beam 12 by means of a pin 22 which is received in a longitudinal slot 24 in the beam 12 so that relative longitudinal and pivotal movement between the pin 22 and beam 12 is permitted.

It will be appreciated that there needs to be clearance between the force applying member 14 and a line between the points 16 and 18, indicated at 26, in which the section of the beam 12 between the points 16 and 18 can move when the beam changes shape from curved to straight and vice-versa.

Graph D illustrates the typical clearance 26 required for the beam 12 described above as a function of spacing distance S and Graph E illustrates the typical amount of longitudinal movement between the beam 12 and the pin 22 when the beam 12 changes shape from curved to straight and vice-versa.

The spacing S is 150mm. In this case, the ratio R of spacing distance S between the points 16 and 18 and the total length L (R = S/L) is therefore 0,214.

## Claims

1. A windscreen wiper which includes

   an elongate curved backbone which is of a resiliently flexible material; and
   a force applying member which is connected to the backbone at two spaced apart points, **characterised in that**

   the spacing distance S (expressed in millimetres) between the points is between

   $$S_1 = 0.1 * L \qquad (1)$$

   and

   $$S_2 = 0.35 * L \qquad (2)$$

   where the length L is the total length of the backbone expressed in millimetres.

2. The windscreen wiper as claimed in Claim 1, in which the preferred spacing distance $S_p$ between the spaced apart points is about

   $$S_n = 0.363 * L - 0.000146 * L^2 \qquad (3)$$

3. The windscreen wiper as claimed in Claim 1, in which the force applying member is connected to the backbone in such a manner as to permit relative longitudinal displacement between the force applying member and the backbone.

4. The windscreen wiper as claimed in Claim 1, in which the curved backbone has a varying width and thickness, along its length.

5. The windscreen wiper as claimed in Claim 1, in which the curved backbone has a constant thickness along its length.

6. The windscreen wiper as claimed in Claim 1, in which the curved backbone has a constant width along its length.

7. The windscreen wiper as claimed in Claim 1, in which the backbone has a free form curvature in a plane.

8. The windscreen wiper as claimed in Claim 1, in which the backbone has a compound curvature.

9. The windscreen wiper as claimed in Claim 1, in which the force applying member straddles the geometric centre of the backbone.


**Patentansprüche**

1. Scheibenwischer, der umfaßt:

   einen verlängerten gebogenen Rücken, der aus einem elastischen, flexiblen Material besteht; und ein Kraftangriffselement, das an zwei voneinander beabstandeten Punkten mit dem Rücken verbunden ist,

   wobei die Abstandslänge S (in Millimetern ausgedrückt) zwischen den Punkten zwischen

$$S_1 = 0,1 \cdot L \qquad (1)$$

   und

$$S_2 = 0,35 \cdot L \qquad (2)$$

   liegt,
   worin die Länge L die in Millimetern ausgedrückte Gesamtlänge des Rückens ist.

2. Scheibenwischer nach Anspruch 1, wobei die bevorzugte Abstandslänge $S_P$ zwischen den voneinander beabstandeten Punkten etwa

$$S_P = 0,363 \cdot L - 0,000146 \cdot L3 \qquad (3).$$

   beträgt.

3. Scheibenwischer nach Anspruch 1, wobei das Kraftangriffselement mit dem Rücken derart verbunden sein, daß eine relative Längsverschiebung zwischen dem Kraftangriffselement und dem Rük-

ken möglich ist.

4. Scheibenwischer nach Anspruch 1, wobei der gebogene Rükken eine sich entlang der Länge ändernde Breite und Dicke aufweist.

5. Scheibenwischer nach Anspruch 1, wobei der gebogene Rükken eine konstante Dicke entlang der Länge aufweist.

6. Scheibenwischer nach Anspruch 1, wobei der gebogene Rükken eine konstante Breite entlang der Länge aufweist.

7. Scheibenwischer nach Anspruch 1, wobei der gebogene Rükken in einer Ebene eine Freiflächenkrümmung aufweist.

8. Scheibenwischer nach Anspruch 1, wobei der gebogene Rükken eine zusammengesetzte Krümmung aufweist.

9. Scheibenwischer nach Anspruch 1, wobei das Kraftangriffselement das geometrische Zentrum des Rückens überspannt.


**Revendications**

1. Essuie-glace comprenant un balai incurvé de forme allongée en matériau flexible de manière élastique, et un élément d'application de force qui est connecté au balai en deux points mutuellement espacés, **caractérisé en ce que**

   la distance d'espacement S (exprimée en millimètres) entre les points est comprise entre

$$S_1 = 0,1*L \qquad (1)$$

   et

$$S_2 = 0,35*L \qquad (2)$$

   où la longueur L est la longueur totale du balai exprimée en millimètres.

2. Essuie-glace selon la revendication 1, dans lequel la distance d'espacement préférée $S_p$ entre les points mutuellement espacés vaut environ :

$$S_p = 0,363 * L - 0,000146 * L2 \qquad (3)$$

3. Essuie-glace selon la revendication 1, dans lequel l'élément d'application de force est connecté au balai de manière à permettre le déplacement longitudinal relatif entre l'élément d'application de force et le balai.

4. Essuie-glace selon la revendication 1, dans lequel le balai incurvé a une largeur et une épaisseur qui varient sur sa longueur.

5. Essuie-glace selon la revendication 1, dans lequel le balai incurvé a une épaisseur constante sur sa longueur.

6. Essuie-glace selon la revendication 1, dans lequel le balai incurvé a une largeur constante sur sa longueur.

7. Essuie-glace selon la revendication 1, dans lequel le balai a une forme de courbure libre dans un plan.

8. Essuie-glace selon la revendication 1, dans lequel le balai a une courbure composée.

9. Essuie-glace selon la revendication 1, dans lequel l'élément d'application de force enjambe le centre géométrique du balai.

FIGURE 1

Beam Width (mm):

GRAPH A.

FIGURE 2

Beam Thickness (mm):

Position Along Length of Beam (mm):

GRAPH B.

FIGURE 3

GRAPH C.

FIGURE 4

**GRAPH D**

**FIGURE 5**

**GRAPH E**

**FIGURE 6**